# EUROPEAN PATENT SPECIFICATION

(11) **EP 0 392 647 B1**
(45) Date of publication and mention of the grant of the patent: **18.05.1994**
(21) Application number: 90300406.7
(22) Date of filing: 15.01.1990
(51) Int. Cl.: G08C 19/02, H04L 27/10

(54) **Current loop arrangements with FSK**
Einrichtungen mit Frequenzumtastung für Stromschleife
Dispositifs avec FSK pour boucle de courant

(30) Priority: 12.04.1989 US 337006
(43) Date of publication of application: 17.10.1990
(73) Proprietor: INTERNATIONAL CONTROL AUTOMATION FINANCE S.A., Ville de Luxembourg (LU)
(72) Inventor: Bastijanic, Edward, Concord, Ohio 44077 (US); Nemer, Joseph C., Mayfield Heights, Ohio 44124 (US)
(74) Representative: Cotter, Ivan John

(56) References cited:
- FR-A- 2 342 600
- GB-A- 2 195 798
- US-A- 4 091 361
- US-A- 4 606 049
- EDN ELECTRICAL DESIGN NEWS. vol. 27, no. 8, 14 April 1982, NEWTON, MASSACHUSETT page 196 R.RICE: "XOR gate controls oscillator frequency"

## Description

This invention relates to current loop arrangements.

Frequency shift keying (FSK) is a form of frequency modulation commonly used in low-speed modems in which two states of a signal are transmitted at two separate frequencies. A "1" is transmitted by a predefined signal frequency (space frequency) and a "0" is transmitted by another predefined signal frequency (mark frequency). In noisy environments, it has been found that FSK has more noise immunity than other forms of modulation, such as amplitude modulation or phase modulation. In power limited devices, such as loop transmitters, the use of FSK for on-line communication between the transmitter and another device typically requires a substantial amount of power due to the numerous circuit elements required to decode and encode the FSK signals. In order to minimise power usage, modulation techniques not utilising frequency shift keying have been developed, such as that employed in US Patent No. US-A-4 607 247 (Sterling, Jr., et al).

Another example of such a system is disclosed in British Published Patent Application GB-A-2 195 798 which transmits data represented by the presence/absence of a group of a predetermined number of consecutive periods of a periodic signal.

Because of the foregoing, it has become desirable to develop an FSK modulation system and demodulation system which minimise overall power usage and hardware requirements.

According to a first aspect of the invention there is provided a current loop arrangement having:
a power supply for supplying current at various current levels between 4ma and 20ma;
a current loop connected to the power supply for carrying the current levels;
modulating means for producing signals to be superimposed on the current level within the current loop; and
connecting means for connecting the modulating means to the current loop, the connecting means permitting the communication of signals produced by the modulating means onto the current loop; characterised in that:
said modulating means modulates frequency shift keying pulses to produce signals having a first predefined frequency and a second predefined frequency; and the modulating means comprises a digitally controlled oscillator which produces said signals having a first predefined frequency and a second predefined frequency, the digitally controlled oscillator including capacitance means selectively chargeable and dischargeable at a first rate and at a second rate corresponding to the first predefined frequency and the second predefined frequency, respectively.

According to a second aspect of the invention there is provided a current loop arrangement having:
a power supply for supplying a current at various current levels between 4ma and 20ma;
a current loop connected to the power supply for carrying the current levels, said current levels being modulated by signals superimposed on the current levels within the current loop;
demodulating means for demodulating said current level; and
connecting means for connecting the demodulating means to the current loop; characterised in that:
said current levels are modulated by frequency shift keying pulses; and the demodulating means comprises digitally controlled oscillator means operative to produce signals having a first predefined frequency and having a second predefined frequency, the digitally controlled oscillator including capacitance means selectively chargeable and dischargeable at a first rate and at a second rate corresponding to said first predefined frequency and said second predefined frequency, respectively.

A preferred form of implementation of the invention described in detail below solves or at least alleviates the above-mentioned problems associated with the prior art by providing an FSK modulation system and/or an FSK demodulation system which minimise power requirements and the number of components required in same. The modulation system includes a digitally controlled oscillator whose output frequency is regulated by the rate of charging and discharging of a capacitor within the oscillator. Such an oscillator is known from Vol.27, no.8 of Electrical Design News of 14 April 1982 (page 196). A predefined upper frequency (mark frequency) is determined by the value of a parallel combination of resistors, whereas a predefined lower frequency (space frequency) is determined by the ratio of the resistance of one of the foregoing resistors to the sum of the resistances of both resistors. The signal produced by the digitally controlled oscillator is superimposed on a current loop, enabling serial communication by FSK on the loop. The demodulation system includes a digitally controlled oscillator and a phase comparator interconnected in a phase-locked loop arrangement. The signal produced by the phase comparator is filtered and compared to another signal to produce an output signal that is a digital representation of the FSK superimposed on the current loop.

The invention will now be further described, by way of illustrative and non-limiting example, with reference to the accompanying drawings, in which:
Figure 1 is a schematic drawing of a frequency shift keying modulation system embodying the invention;
Figure 2 illustrates waveforms at various points within the modulation system shown in Figure 1;
Figure 3 is a schematic drawing of a frequency shift keying demodulation system embodying the invention; and
Figure 4 illustrates waveforms at various points within the demodulation system shown in Figure 3.

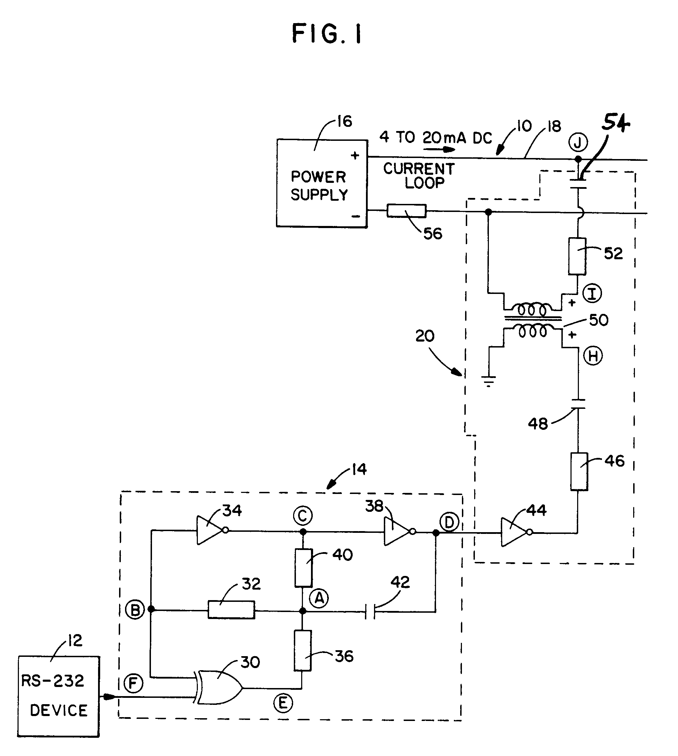

Figure 1 is a schematic diagram of a frequency shift keying modulation system 10. The system 10 comprises a transmitting interface device 12, a digitally controlled oscillator 14, a power supply 16 powering a current loop 18, and a circuit 20 interconnecting the digitally controlled oscillator 14 and the current loop 18.

The interface device 12 is commonly referred to as an RS-232, or the like, and is properly referred to as an Interface Between Data Terminal Equipment and Data Communication Equipment Employing Serial Binary Data Interchange. The interface device 12 generates a supply voltage Vs for one of the two possible signal states (space frequency) and a zero output voltage for the other signal state (mark frequency). An output of the interface device 12 is connected (at a point F) to an input of an exclusive OR gate 30 within the digitally controlled oscillator 14. Another input of the exclusive OR gate 30 is connected at a point B to one side of a resistor 32 and to an input of an inverter 34. An output of the exclusive OR gate 30 is connected (at a point E) to a resistor 36 which is connected to the other side of the resistor 32 at a point A. An output of inverter 34 is connected at a point C to an input of an inverter 38 and to one side of a resistor 40. The other side of the resistor 40 is connected to the resistors 32 and 36 at the point A. A capacitor 42 is connected from the point A to an output of the inverter 38 (point D). The output of the inverter 38, which represents the output of the digitally controlled oscillator 14, is connected to an input of an inverter 44 in the circuit 20. An output of the inverter 44 is connected to a series combination of a resistor 46 and a capacitor 48 which is connected (at a point H) to one side of a transformer 50 which is grounded. The other side of the transformer 50 is connected across the current loop 18 via a resistor 52 and a capacitor 54. The current loop 18 includes a resistor 56 and is connected to an output of the power supply 16 that can typically draw a minimum of 4 mA to a maximum of 20 mA.

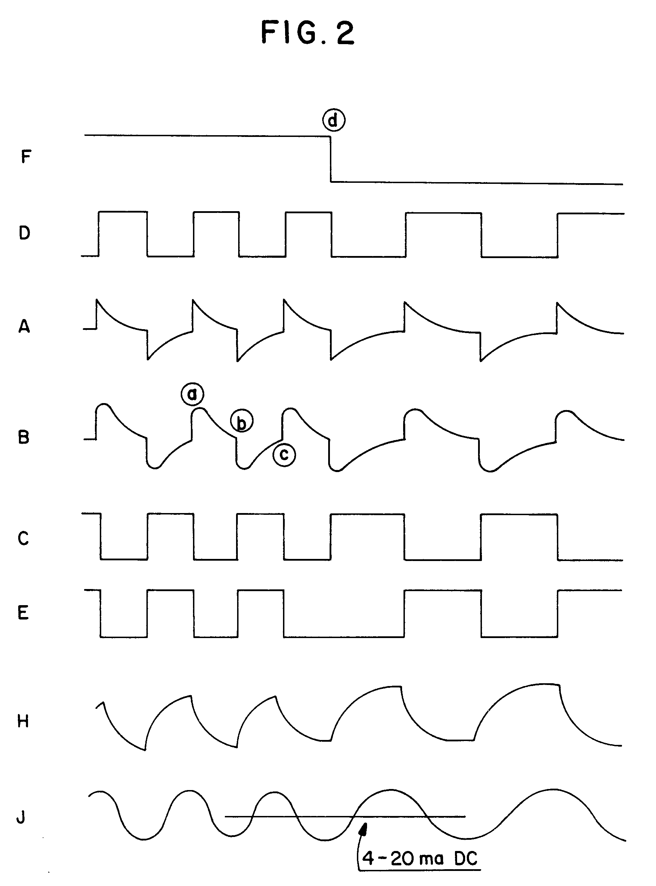

Operationally, the output voltage of the interface device 12 controls the frequency of the digitally controlled oscillator 14. Referring to Figure 2, the output of the interface device 12 is shown as waveform F. The other waveforms shown in Figure 2 represent the voltages at various points within the modulation system 10 and correspond with the letters shown on Figure 1. With respect to waveform F, presence of a supply voltage Vs at the output of the interface device 12 results in the digitally controlled oscillator 14 producing a predefined upper signal frequency (space frequency), whereas zero voltage at the output of the interface device 12 results in the oscillator 14 producing a predefined lower signal frequency (mark frequency). When a supply voltage Vs exists at the point F, the exclusive OR gate 30 acts as an inverter for the signal at the point B. The presence of a voltage at the point B, as shown in Figure 2 (portion a), causes the voltages at the points E and C to be zero and the voltage at the point D to be the supply voltage Vs. Inasmuch as the exclusive OR gate 30 and inverter 34 have high input impedances, a negligible current flows through the resistor 32 and the voltages at the points A and B are substantially equal to the supply voltage Vs. As the capacitor 42 starts charging from the point D through the resistors 40 and 36 to the points C and E, respectively, the voltage at the point A starts decreasing from the supply voltage Vs toward zero volts. When the points B and A reach the maximum input voltage for a logic zero trip point (VIL) of the exclusive OR gate 30 and inverter 34, these devices switch, causing the voltages at the points C and E to increase to the supply voltage Vs which, in turn, causes the voltage at the points B, A and D to become zero. When the point D becomes at zero volts, the capacitor 42 starts discharging through the resistors 40 and 36, causing the voltage at the point B to start increasing from zero volts towards the supply voltage Vs. When the point B reaches the minimum input voltage for logic one trip point (VIH) of the exclusive OR gate 30 and inverter 34, these devices switch, causing the voltage at the points C and E to become zero and the voltage at the points B, A and D to become the supply voltage Vs. Since the points E and C are equal at all times, the charging and discharging time of the capacitor 42 is proportional to the parallel combination of the resistors 40 and 36. Oscillations continue at the rate of charging and discharging of the capacitor 42, which represents the predefined upper signal frequency (space frequency), until the input voltage at the point F changes.

When the output of the interface device 12 is zero volts (Figure 2, position d), the exclusive OR gate 30 then acts as a non-inverting buffer for the voltage at the point B, resulting in the output at the point E equalling the input at the point B. This condition causes the points C and E to be of opposite potential at all times. When this occurs, the charging and discharging time of the capacitor 42 will be proportional to the ratio of the resistance of the resistor 40 to the sum of the resistances of the resistors 40 and 36. This results in the capacitor 42 charging and discharging at a slower rate which, in turn, causes oscillations to be produced at a predefined lower frequency (mark frequency). Thus, the digitally controlled oscillator 14 produces an output (at the point D) at a predefined upper signal frequency when the input voltage at the point F is equal to the supply voltage Vs and produces a predefined lower signal frequency when the input at the point F is zero volts.

The output of the digitally controlled oscillator 14 drives the transformer 50 via the inverter 44, resistor 46 and capacitor 48. The transformer 50 is used to isolate the oscillator 14 from the current loop 18. The signal at the point H in Figure 1 is reflected to a point I by means of the transformer 50 and is ac-coupled to the current loop 18 through the resistor 52 and capacitor 54. The transformer 50 prevents any dc current from the current loop 18 from being transmitted to the digitally controlled oscillator 14, and vice versa. This permits on-line communication on the current loop 18 without disturbing the 4 to 20 mA DC current present thereon.

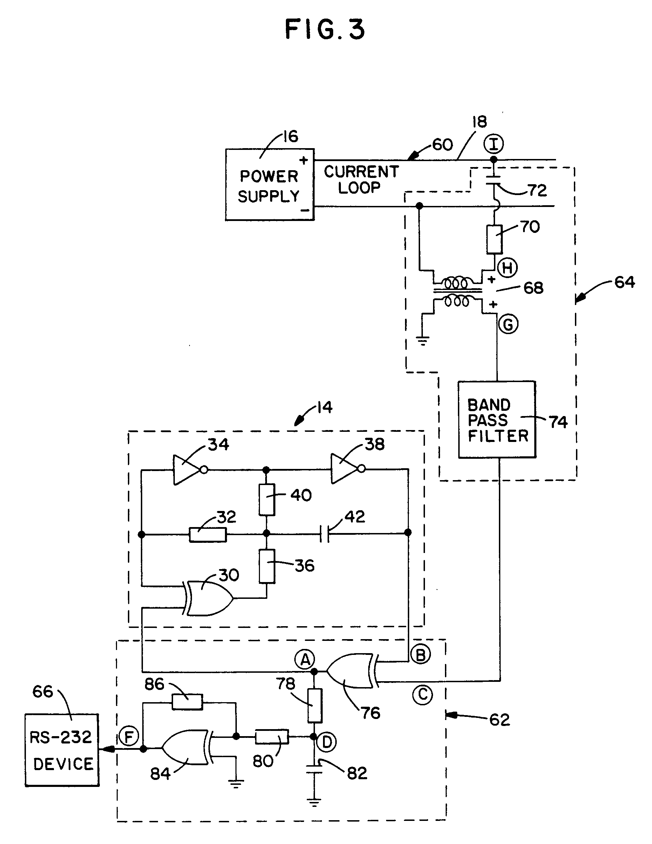

Figure 3 is a schematic diagram of a frequency shift keying demodulation system 60. Those components in Figure 3 which are similar to the components utilised within the modulation system 10 shown in Figure 1 and designated by similar references and will not be discussed in further detail. The demodulation system 60 includes a demodulator 62, a circuit 64 interconnecting the demodulator 62 with the current loop 18, a digitally controlled oscillator 14, and a receiving interface device 66. The circuit 64 interconnects the current loop 18 with the demodulator 62 by means of a transformer 68 having one side connected across the current loop 18 via a resistor 70 and a capacitor 72. The other side of the transformer 68 is connected to ground and to a band-pass filter 74 having an output connected to one input of an exclusive OR gate 76 within the demodulator 62. Another input of the exclusive OR gate 76 is connected to the output of the inverter 38 within the digitally controlled oscillator 14. An output of the exclusive OR gate 76 is connected to an input of the exclusive OR gate 30 within the oscillator 14 and to a resistor 78 which is connected to one side of a resistor 80 and to ground via a capacitor 82. The other side of resistor 80 is connected to an input of an exclusive OR gate 84 and to an output of the exclusive OR gate 84 via a resistor 86. Another input of the exclusive OR gate 84 is connected to ground. The output of the exclusive OR gate 84 is connected to the receiving interface device 66, which can be a RS-232, or the like.

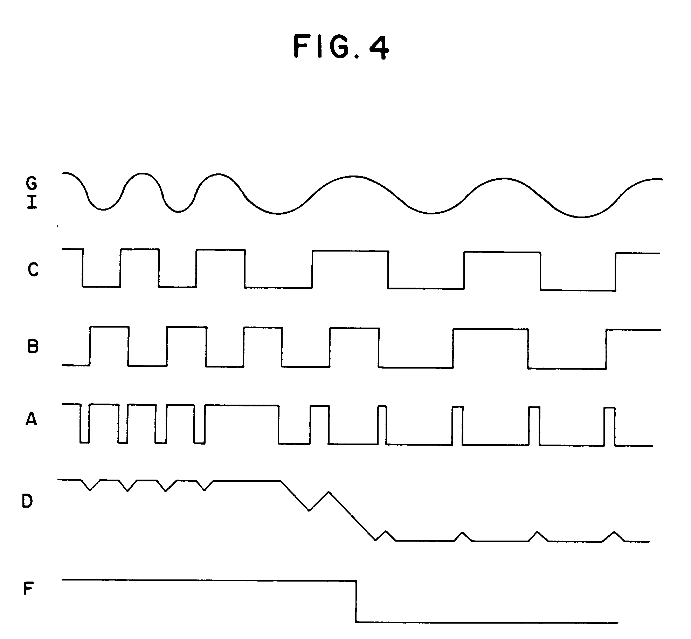

Waveforms at selected points in Figure 3 are shown in Figure 4 and correspond with the letters shown in Figure 3. Operationally, a frequency shift keying signal on the current loop 18 is transmitted through the capacitor 72, resistor 70 and transformer 68 to the band-pass filter 74. The ac-coupling of the transformer 68 prevents any dc current from the current loop 18 from passing to the demodulator 62. The band-pass filter 74 rejects any signal outside of the FSK band. The output of the filter 74, shown in Figure 4 as a waveform C, is a digital representation of the filtered FSK signal.

The system constituted by the digitally controlled oscillator 14 and the exclusive OR gate 76 is in a form of a phase-locked loop. The signals at points B and C in Figure 3 are compared by the exclusive OR gate 76, producing an output at a point A in Figure 3 which is transmitted back to the digitally controlled oscillator 14 to adjust its frequency so as to be the same as the input frequency at the point C. In order to accomplish the foregoing, the duty cycle of the digitally controlled oscillator 14 varies with the input frequency. A low input frequency produces an oscillator duty cycle of less than 50% whereas a high input frequency produces an oscillator duty cycle of greater than 50%.

The signal at a point D in Figure 3 is the average of the signal produced at the point A filtered by the RC circuit constituted by the resistor 78 and capacitor 82. The OR gate 84 acts as a voltage comparator; ie, if the voltage at point D is above Vcc/2, then the voltage at a point F in Figure 3 goes high (Figure 4-waveform F). However, if the voltage at the point D is less than Vcc/2, then the voltage at the point F goes low. In essence, the voltage at the point F is a digital representation of the FSK signal and can be transmitted to any data terminal equipment (not shown) by the interface device 66. The resistors 86 and 80 introduce a hysteresis to the OR gate 84 to reduce any jitter when a level transition occurs.

Major advantages of the modulation system 10 and the demodulation system 60 are their low power requirements. Such low power requirements can be attributed to the reduced number of components required within the systems, the use of CMOS chips where appropriate, and low unit values for the capacitors utilised. The systems, 10 and 60 are also frequency stable under wide variations in power supply voltage because the input trip points (VIH and VIL) of the gates are proportional to the power supply voltage. The foregoing advantages permit reliable on-line communication between the low power devices using the same current loop that carried the 4 to 20 mA of dc without effecting the dc current value.

## Claims

1. A current loop arrangement having:
a power supply (16) for supplying current at various current levels between 4ma and 20ma;
a current loop (18) connected to the power supply (16) for carrying the current levels;
modulating means (14) for producing signals to be superimposed on the current level within the current loop; and
connecting means (20) for connecting the modulating means (14) to the current loop (18), the connecting means (20) permitting the communication of signals produced by the modulating means (14) onto the current loop (18); characterised in that:
said modulating means modulates frequency shift keying pulses to produce signals having a first predefined frequency and a second predefined frequency; and the modulating means (14) comprises a digitally controlled oscillator which produces said signals having a first predefined frequency and a second predefined frequency, the digitally controlled oscillator (14) including capacitance means (42) selectively chargeable and dischargeable at a first rate and at a second rate corresponding to the first predefined frequency and the second predefined frequency, respectively.

2. An arrangement according to claim 1, wherein the connecting means (20) includes transformer means (50) connected to the modulating means (14) and to the current loop (18).

3. An arrangement according to claim 2, wherein the transformer means (50) serves to isolate the modulating means (14) from the current loop (18), permitting on-line communication of said signals having said the first predefined frequency and the second predefined frequency onto the current loop (18).

4. An arrangement according to any one of the preceding claims, including demodulating means (62, 14) for demodulating a signal modulated on the current loop (18), the demodulating means (62, 14) being operative to produce frequency shift keying pulses representative of said modulated signal.

5. A current loop arrangement having:
a power supply (16) for supplying a current at various current levels between 4ma and 20ma;
a current loop (18) connected to the power supply (16) for carrying the current levels, said current levels being modulated by signals superimposed on the current levels within the current loop;
demodulating means (62, 14) for demodulating said current level; and
connecting means (64) for connecting the demodulating means (62, 14) to the current loop (18); characterised in that:
said current levels are modulated by frequency shift keying pulses; and the demodulating means (62, 14) comprises digitally controlled oscillator means (14) operative to produce signals having a first predefined frequency and having a second predefined frequency, the digitally controlled oscillator (14) including capacitance means (42) selectively chargeable and dischargeable at a first rate and at a second rate corresponding to said first predefined frequency and said second predefined frequency, respectively.

6. An arrangement according to claim 5, wherein the demodulating means (62, 14) includes comparator means (76) connected to the digitally controlled oscillator means (14) in a phase-locked loop arrangement.

7. An arrangement according to any one of claims 5 and 6, wherein the connecting means (64) includes transformer means (68) connected to the demodulating means (62, 14) and to the current loop (18).

8. An arrangement according to claim 7, wherein the connecting means (64) includes filter means (74) interposed between the demodulating means (62, 14) and the transformer means (68).

## Patentansprüche

1. Stromschleifeneinrichtung mit:
- einer Leistungsversorgung (16) zur Stromversorgung bei verschiedenen Stromstärken zwischen 4mA und 20mA;
- einer Stromschleife (18) zur Leitung der Stromstärken, die mit der Leistungsversorgung (16) verbunden ist;
- einer Modulationseinrichtung (14) zur Erzeugung von Signalen, die dem Strom innerhalb der Stromschleife überlagert werden; und
- Verbindungseinrichtungen (20) zur Verbindung der Modulationseinrichtung (14) mit der Stromschleife (18), wobei die Verbindungseinrichtungen (20) die Übertragung von Signalen, die von der Modulationseinrichtung (14) erzeugt werden, auf der Stromschleife (18) erlauben;
dadurch gekennzeichnet, daß:
- diese Modulationseinrichtung frequenzumgetastete Pulse moduliert, um Signale zu erzeugen, die eine erste vorbestimmte Frequenz und eine zweite vorbestimmte Frequenz aufweisen und diese Modulationseinrichtung (14) einen digigtal gesteuerten Oszillator aufweist, der diese Signale erzeugt, die eine erste vorbestimmte Frequenz und eine zweite vorbestimmte Frequenz aufweisen, wobei der digital gesteuerte Oszillator (14) kapazitive Einrichtungen (42) aufweist, die selektiv bzw. ansteuerbar mit einer ersten Geschwindigkeit und zweiten Geschwindigkeit ladbar und entladbar sind, die jeweils der ersten vorbestimmten Frequenz und der zweiten vorbestimmten Frequenz entspricht.

2. Anordnung nach Anspruch 1, bei der die Verbindungseinrichtungen (20) eine mit der Modulationseinrichtung (14) und der Stromschleife (18) verbundene Transformatoreinrichtung (50) aufweist.

3. Anordnung nach Anspruch 2, bei der die Transformatoreinrichtung (50) dazu dient, die Modulationseinrichtung (14) von der Stromschleife (18) zu isolieren, um so die Onlineübertragung der erwähnten Signale, die die erste vorbestimmte Frequenz und die zweite vorbestimmte Frequenz aufweisen, auf der Stromschleife (18) zu erlauben.

4. Anordnung nach einem der vorhergehenden Ansprüche mit einer Demodulationseinrichtung (62, 14) zur Demodulation eines auf der Stromschleife (18) modulierten Signals, wobei die Demodulationseinrichtung (62, 14) dahingehend wirken, frequenzumgetastete Pulse zu erzeugen, die das erwähnte modulierte Signal darstellen.

5. Stromschleifenanordnung mit:
- einer Leistungsversorgung (16) zur Stromversorgung bei verschiedenen Stromstärken zwischen 4mA und 20mA;
- einer Stromschleife (18) zur Leitung der Stromstärken, die mit der Leistungsversorgung (16) verbunden ist; wobei die Stromstärken von Signalen moduliert werden, die dem Strom innerhalb der Stromschleife überlagert werden;
- einer Demodulationseinrichtung (62, 14) zur Demodulation dieses Stromes; und
- Verbindungseinrichtungen (64) zur Verbindung der Demodulationseinrichtung (62, 14) mit der Stromschleife (18);
dadurch gekennzeichnet, daß:
- diese Strompegel von frequenzumgetasteten Pulsen moduliert werden und die Demodulationseinrichtung (62, 14) eine digigtal gesteuerte Oszillatoreinrichtung (14) aufweist, die Signale erzeugt, die eine erste vorbestimmte Frequenz und eine zweite vorbestimmte Frequenz aufweisen, wobei der digital gesteuerte Oszillator (14) kapazitive Einrichtungen (42) aufweist, die selektiv bzw. ansteuerbar ladbar und entladbar mit einer ersten Geschwindigkeit und zweiten Geschwindigkeit, die jeweils der ersten vorbestimmten Frequenz und der zweiten vorbestimmten Frequenz entspricht.

6. Anordnung nach Anspruch 5, bei der die Demodulationseinrichtung (62, 14) Komparatoreinrichtungen (76) aufweisen, die mit der digital gesteuerten Oszillatoreinrichtung (14) in einer phasenstarren Schleifenverbindung steht.

7. Anordnung nach einem der Ansprüche 5 und 6, bei der die Verbindungseinrichtungen (64) mit der Modulationseinrichtung (62, 14) und der Stromschleife (18) verbundene Transformatoreinrichtungen (68) aufweisen.

8. Anordnung nach Anspruch 7, bei der die Verbindungseinrichtungen (64) Filtereinrichtungen (74) aufweisen, die zwischen die Demodulationseinrichtungen (62, 14) und die Transformatoreinrichtungen (68) geschaltet sind.

## Revendications

1. Système à boucle de courant comportant:
une alimentation en énergie (16) pour fournir du courant à divers niveaux de courant compris entre 4 mA et 20 Ma;
une boucle de courant (18) reliée à l'alimentation en énergie (16) pour porter les niveaux de courant;
des moyens de modulation (14) pour produire des signaux à superposer au niveau de courant à l'intérieur de la boucle de courant; et
des moyens de connexion (20) pour relier les moyens de modulation (14) à la boucle de courant (18), les moyens de connexion (20) permettant la communication sur la boucle de courant (18) de signaux produits par les moyens de modulation (14); caractérisé en ce que:
lesdits moyens de modulation modulent des impulsions de modulation par déplacement de fréquence pour produire des signaux présentant une première fréquence prédéfinie et une second fréquence prédéfinie; et les moyens de modulation (14) sont constitués par un oscillateur à commande numérique qui produit lesdits signaux présentant une première fréquence prédéterminée et une seconde fréquence prédéterminée, l'oscillateur à commande numérique (14) comprenant des moyens formant capacité (42) aptes à être chargés et déchargés de façon sélective à une première vitesse et à une seconde vitesse correspondant à la première fréquence prédéfinie et à la seconde fréquence prédéfinie, respectivement.

2. Système selon la revendication 1 dans lequel les moyens de connexion (20) comprennent des moyens formant transformateur (50) reliés aux moyens de modulation (14) et à la boucle de courant (18).

3. Système selon la revendication 2 dans lequel les moyens formant transformateur (50) servent à isoler les moyens de modulation (14) par rapport à la boucle de courant (18), permettant la communication en ligne sur la boucle de courant (18) desdits signaux présentant ladite première fréquence prédéfinie et ladite seconde fréquence prédéfinie.

4. Système selon l'une quelconque des revendications précédentes, comprenant des moyens de démodulation (62, 14) pour démoduler un signal modulé sur la boucle de courant (18), les moyens de démodulation (62, 14) agissant pour produire des impulsions de modulation par déplacement de fréquence représentatives dudit signal modulé.

5. Système à boucle de courant comportant:
une alimentation en énergie (16) pour fournir un courant à divers niveaux de courant compris entre 4 Ma et 20 Ma;
une boucle de courant (18) reliée à l'alimentation en énergie (16) pour porter les niveaux de courant, lesdits niveaux de courant étant modulés par des signaux superposés aux niveaux de courant à l'intérieur de la boucle de courant;
des moyens de démodulation (62, 14) pour démoduler ledit niveau de courant; et
des moyens de connexion (64) pour relier les moyens de démodulation (62, 14) à la boucle de courant (18); caractérisé en ce que:
lesdits niveaux de courant sont modulés par des impulsions de modulation par déplacement de fréquence, et les moyens de démodulation (62, 14) sont constitués par des moyens formant oscillateur à commande numérique (14) agissant pour produire des signaux présentant une première fréquence prédéfinie et présentant une seconde fréquence prédéfinie, l'oscillateur à commande numérique (14) comprenant des moyens formant capacité (42) aptes à être chargés et déchargés de façon sélective à une première vitesse et à une seconde vitesse correspondant à ladite première fréquence prédéfinie et à ladite seconde fréquence prédéfinie, respectivement.

6. Système selon la revendication 5, dans lequel les moyens de démodulation (62, 14) comprennent des moyens formant comparateur (76) reliés aux moyens formant oscillateur à commande numérique (14) dans un système à boucle à verrouillage de phase.

7. Système selon l'une quelconque des revendications 5 et 6 dans lequel les moyens raccordement (64) comprennent des moyens formant transformateur (68) reliés aux moyens de démodulation (62, 14) et à la boucle de courant (18).

8. Système selon la revendication 7 dans lequel les moyens de connexion (64) comprennent des moyens formant filtre (74) interposés entre les moyens de démodulation (62, 14) et les moyens formant transformateur (68).
